# EUROPÄISCHE PATENTANMELDUNG

(11) **EP 3 196 178 A1**
(43) Veröffentlichungstag der Anmeldung: **26.07.2017**
(21) Anmeldenummer: 16002580.5
(22) Anmeldetag: 05.12.2016
(51) Int. Cl.: C04B 7/46, C04B 7/24

(54) **VERFAHREN ZUR VERWERTUNG VON ASBESTZEMENTABFALL**

(30) Priorität: 22.01.2016 CZ 20160027
(71) Anmelder: Vykumny ustav stavebrich hmot, a.s., 617 00 Brno (CZ)
(72) Erfinder: Stanek, Theodor, CZ-60200 (CZ)
(74) Vertreter: Markes, Libor

(57) **Zusammenfassung**

Verfahren zur Verwertung von Asbestzementabfall durch thermische Verarbeitung, die darin besteht, dass der ungeteilte Abfall in einem Schachtofen oder in einem gleichartigen Ofen gebrannt wird, in dem die Temperatur 2 bis 4 Stunden auf 1100°C bis 1250°C steigt und dann 6 bis 10 Stunden gehalten wird, das Material danach im Ofen langsam abgekühlt und nach der Abkühlung gemahlen und als hydraulisches Bindemittel für Baumateriale verwendet wird.

## Beschreibung

Die Erfindung betrifft ein Verfahren zur Verwertung von Asbestzementabfall durch seine thermische Bearbeitung.

Asbest ist eine Sammelbezeichnung für verschiedene natürlich vorkommende, faserförmige kristallisierte Silikat-Minerale. In der Natur kommt er in zwei silikatischen Mineralgruppen vor: Serpentingruppe (Chrysotil) und Amphibolgruppe (Amosit, Grunerit, Tremolit, Krokydolith, Anthophyllit, Aktinolith, Riebeckit und Cummingtonith). Gemeinsam für alle diese Mineralien ist deren faserartige Struktur, wo die Faserlänge über den Durchschnitt der Faser mehrfach hinausgeht. Die Fasern neigen dazu, sich immer zu spalten. Als asbesthaltige Materialien werden Stoffe, Zubereitungen, Zwischenprodukte, Produkte und Abfälle bezeichnet, die mehr als 0,1 Gew.-% Asbest enthalten.

Die Fasergeometrie, d.h. das Längen-/Durchmesser-Verhältnis, Art der Fasern und deren Fähigkeit, sich in das Lungengewebe zu spießen, verursachen die gesundheitsgefährdende Wirkung von Asbest. Die gesundheitsschädlichen Fasern sind die mit einer Faserlänge ab 5 µm, einem Durchmesser von max. 3 µm und einem Längen-/DurchmesserVerhältnis von mindestens 3:1.

Asbest wurde in die gesundheitsschädlichen Chemikalien eingruppiert, die nach Einatmen, Verschlucken oder Durchdringung durch die Haut als karzinogene Substanzen den Krebs und als mutagene Substanzen die genetische Schädigungen auslösen können.

Für seine ausgezeichneten technologischen Eigenschaften wie Festigkeit, Biegsamkeit und Hitze- und Säurebeständigkeit fand Asbest in der Vergangenheit eine breite Benutzung. Seine Hitzebeständigkeit bestimmte ihn für Wärmeisolierung, als Material für Bremsenbelag, Dichtungen, feuerbeständige Textilien und Fasern und seine Festigkeit für Armierung von Bauelementen, insbesondere von Rohren vor. Die breiteste Verwendung fand Asbest im Bauwesen. Eine große Menge von Asbest befindet sich noch in älteren Bauten. Asbesthaltige Materialien in einem größeren oder geringeren Maß finden sich z.B. in jedem, vor 1990 in Tschechien gebauten Bauwerk. Der asbesthaltige Abfall wird fortlaufend kostenaufwändig deponiert. Diese Mühldeponien stellen dabei ein großes Risiko für die künftigen Generationen dar.

Es sind Technologien bekannt, die dieses Risiko mindern. In der DE4124620 wird vorgeschlagen, Asbestsplitt mit weiterem gefährlichem Abfall zu vermischen und der wässrigen Suspension dieser Materialien Zement hinzufügen. Aus der Suspension werden dann Betonblöcke gebildet, die zum dauerhaften gefahrlosen Deponieren geeignet sind.

Gemäß der US 5006490 wird Asbestsplitt mit pulverförmigem Aluminium und Magnesium vermischt, und während einer exothermen Reaktion werden aus dem Gemisch räumliche Gebilden - Blöcke oder Rohre gebildet.

Ein Verfahren der thermischen Entsorgung von Mineralfasern ist in der DE 4330551 beschrieben. Die asbest- oder anderen mineralfaserhaltigen Stoffe werden gemahlen und homogenisiert und je nach Zusammensetzung des Gemisches wird geeignetes Material wie Kalkstein, Kreide, Gipsstein u.Ä. beigemischt. Das Gemisch wird in einem Zementofen bei Temperaturen von 1250°C bis 1450°C gebrannt und nach Auskühlen zu Fasern, Isoliermatten u.Ä. verarbeitet. Nachteilig an diesem Verfahren ist, dass es das Mahlen einbezieht, bei dem die Asbestpartikeln unvermeidlich in die Umgebung entweichen. Außerdem benötigt die erforderliche hohe Brenntemperatur den Einsatz eines Zementofens.

Der Erfindung liegt die Aufgabe zugrunde, ein thermisches Verfahren der Verwertung von Asbestzementprodukten, wie Dachsteinen, Welltafeln, Kammplatten, Lüftungsleitungen, Teilen des Dachhimmels, großformatigen Deckplatten, Druck- und Kanalrohren und Formstücken, Blumenkästen oder Gartenzubehör zu entwickeln, das die Nachteile der bekannten Lösungen eliminiert.

Diese Aufgabe wird erfindungsgemäß durch ein Verfahren zur Verwertung von Asbestzementabfall durch thermische Verarbeitung gelöst, das darin besteht, dass der ungeteilte Abfall in einem Schachtofen oder in einem gleichartigen Ofen gebrannt wird, in dem die Temperatur 2 bis 4 Stunden auf 1100°C bis 1250°C steigt und dann 6 bis 10 Stunden gehalten wird, das Material danach im Ofen langsam abgekühlt und nach der Abkühlung gemahlen und als hydraulisches Bindemittel für Baumateriale verwendet wird.

Vor dem Brennen kann dem Asbestzementabfall reiner Stückkalkstein hinzugefügt werden, um 10 bis 80 Gew.-% Beschickung zu bilden.

Der Ofen wird vorteilhaft mit Asbestzementabfall und Kalkstein in wechselnden Schichten chargiert.

Zu einer Wärmedegradation von Chrysotil und dessen Umwandlung zu anderen ungefährlichen Phasen kommt es nach Literaturangaben bei Temperaturen von 650°C bis 800°C. Bei Amphibolasbesten ist diese Temperatur höher und liegt zwischen 900°C und 1100°C.

Asbestzementprodukte haben eine geeignete chemische Zusammensetzung, die der des Portlandzementklinkers ähnlich ist, nur mit Vorbehalt eines niedrigen Kalksättigungswerts. Die chemische Zusammensetzung ist aber im Wesentlichen mit der des hydraulischen Kalks identisch (s. Tafel 1). Zudem enthält das Material eine große Menge von nicht hydratisierten Phasen von Portlandzement - Calciumsilikate Alit und Belit.

**Tafel 1: Beispiel einer Materialprobenanalyse von Eternit-Dacheindeckung**

| **Komponente** | **Inhalt in Gew.%** |
|---|---|
| Glühverlust | 18,05 |
| SiO₂ | 19,72 |
| Gesamt-SO₃ | 0,69 |
| CaO | 47,36 |
| TiO₂ | 0,30 |
| P₂O₅ | 0,16 |
| Na₂O | 0,16 |
| K₂O | 0,39 |
| MgO | 4,21 |
| MnO | 2,60 |
| Fe₂O₃ | 2,49 |
| Al₂O₃ | 3,72 |
| Cl⁻ | 0,029 |

Hydraulische Mörtelbinder sind durch die folgenden chemischen Grundparameter gekennzeichnet:
Kalksättigung - SLP = 100*CaO/(2,8*SiO₂ + 1,18*Al₂O₃ + 0,65*Fe₂O₃)
Silikatmodul - Ms = SiO₂/(Al₂O₃ + Fe₂O₃)
Aluminatmodul - Ma = Al₂O₃/ Fe₂O₃
Hydraulischer Modul - HM = CaO/(SiO₂ + Al₂O₃ + Fe₂O₃)

Tafel 2 gibt die berechneten Grundparameter der Eternit-Probe mit der chemischen Zusammensetzung gemäß Tafel 1 an.

**Tafel 2: Aus der Analyse berechnete chemische Grundparameter der Eternit-Probe**

| **Modul** | **Wert** |
|---|---|
| SLP | 77,4 |
| Ms | 3,18 |
| Ma | 1,49 |
| HM | 1,83 |

Hydraulische Kalke teilen sich nach dem Wert des hydraulischen Moduls in die folgenden Gruppen ein:
1. Schwach hydraulische Kalke - HM = 6 - 9
2. Mittelhydraulische Kalke - HM = 3 - 6
3. Stark hydraulische Kalke - HM = 1,7 - 3

Aus dieser Sicht kommt es durch das Brennen zum Abbau des gefährlichen Asbests und zur Bildung des stark hydraulischen Kalks.

Das Material kann in Schacht- oder Tunnelöfen ohne vorherige Zerkleinerung oder Mahlen gebrannt werden, und deswegen wird die Manipulation mit dem gefährlichen Abfall minimiert. Ist der Abfall in einem brennbaren Versandbehälter verpackt, ist die Abfuhr zum Ofen der Abfuhr zu einer Mülldeponie ähnlich.

Bei einer thermischen Behandlung bei der Temperatur über 1100°C kommt es zum Abbau aller Asbestgruppen und deren Umwandlung in unschädliche Phasen. So bleiben die meisten unhydratisierten Zementphasen, Alit und Belit, zurück und darüber hinaus kommt es zur Bildung von weiterem feinkörnigem Belit, und zwar durch die Reaktion der übrigen Komponenten der festen Phase, insbesondere Ca(OH)₂, CaCO₃, SiO₂ und C-S-H-Zementgels. Eventuell kann auch Klinkerschmelze mitreagieren, die bei einem erhöhten Fe-Inhalt unter diesen Bedingungen lokal entsteht.

Aufgrund der Tatsache, dass die Asbestzementprodukte vorwiegend Flächengebilden sind, ist es vorteilhaft, dem Asbestzement zur Besserung der Luftzugbedingungen beim Brennen in Schachtöfen Stückkalkstein hinzuzufügen, der sonst zum Kalkbrennen bestimmt ist. Die Beschickung wird dann geschichtet, sodass die einzelnen Schichten von Asbestzementprodukten mit Stückkalksteinschichten durchlegt werden. Das Massenverhältnis zwischen Asbestzement und Kalkstein hängt von dem Produzenten ab.

Durch das beschriebene Prozess entstehen Wassermörtelbinder mit einem wählbaren Gehalt von freiem Kalk, der durch Umwandlung des Kalksteins gebildet wird, u.zw. nach den Anforderungen, die der Produzent auf die Eigenschaften des Endprodukts - hydraulischen Kalks stellt. Beim Brennen von Asbestzementprodukten allein entsteht ein Wassermörtelbinder mit minimalem oder keinem Freikalkinhalt.

Die Erfindung wird nachstehend anhand von drei Ausführungsbeispielen näher erläutert.

### Beispiel 1

Zur Zubereitung eines Wassermörtelbinders wurden 5 kg verschmutzte unsortierte Eternit-Dacheindeckung einschließlich Moos, Tonbeimengungen u.dgl. verwendet. Aufgrund einer RTG-Diffraktionsanalyse wurde festgestellt, dass das Material insbesondere durch Portlandit (Ca(OH)₂), Calcit (CaCO₃) und Reste von unhydratisierten Klinkermineralien (identifiziert wurde insbesondere β-C₂S (Ca₂SiO₄)) gebildet ist. Von den Asbestmineralien ist hier nur Chryzotil (Mg₃Si₂O₅(OH)₄) in einer bedeutenden Menge vertreten. Quarz (SiO₂), Markasit (FeS₂) und lehmige Materialien wurden in geringen Mengen identifiziert.

Die Probe wurde in einem elektrischen Superkanthal-Ofen gebrannt, wobei das Verfahren das Brennen in einem Schachtofen simulierte: Anlaufzeit von 3 Stunden auf die Temperatur von 1100°C, Haltezeit von 8 Stunden bei dieser Temperatur und langsame Abkühlung im Ofen bis auf eine Temperatur von ungefähr 200°C. Es ist merkbar, dass die Probe nach dem Brennen kompakt ist, ohne etwaige Merkmale des Zerfalls aufzuweisen, obwohl sie während der langsamen Kühlung der kritischen Temperatur von ca 500°C ausgesetzt war, bei der es zur Transformation von β-C₂S in die γ-Modifikation kommt, die den Zerfall des Klinkers verursacht und hydraulisch inaktiv ist.

Nach dem Brennen wurde die Probe gemahlen und anhand einer RTG-Diffraktionsanalyse wurde deren quantitative Phasenzusammensetzung bestimmt, die in Tafel 3 angegeben ist.

**Tafel 3: Phasenzusammensetzung des gebrannten Eternits in Gew.-%, bestimmt anhand einer RTG-Diffraktionsanalyse**

| **Phase** | **Inhalt in Gew.%** |
|---|---|
| β-C₂S | 57,2 |
| γ-C₂S | 1,4 |
| C₃S | 4,1 |
| C₃A | 4,3 |
| C₄AF | 15,5 |
| freies CaO | 0,0 |
| freies MgO (Periklas) | 4,6 |
| Quarz SiO₂ | 0,7 |
| Bredigit α'-C₂S | 3,9 |
| Åkermanit Ca₂MgSi₂O₇ | 6,2 |
| Maghemit Fe₂O₃ | 1,1 |
| Pyrit FeS₂ | 1,0 |

Aus der Probe des gebrannten Eternits, der ein geeigneter Aushärteregler beigemischt wurde, wurde durch Mahlen bis zur spezifischen Oberfläche von 418 m²/kg ein hydraulisches Bindemittel für Materialprüfungen zubereitet.

Gemäß der EN 196-3 wurden Volumenbeständigkeit und Aushärtezeit bestimmt. Die Ergebnisse sind in Tafel 4 angegeben.

Gemäß der EN 196-1 wurden aus dem Normmörtel Testbalken von 4 x 4 x 16 cm zum Testen der Druck- und Biegezugfestigkeit gebildet. Die Ergebnisse sind in Tafel 5 angegeben.

**Tafel 4: Erstarrung und Volumenbeständigkeit gemäß EN 196-3**

| **Probe** | **Beginn der Erstarrung (St:Min)** | **Gesamtzeit der Erstarrung (St:Min)** | **Volumenbeständigkeit (mm)** |
|---|---|---|---|
| Bindemittel aus gebranntem Eternit | 1:40 | 2:30 | 0,0 |

**Tafel 5: Biegezug- und Druckfestigkeit gemäß EN 196-1 [MPa]**

| **Probe** | **7 Tage** | | **28 Tage** | |
|---|---|---|---|---|
| | Biegen | Druck | Biegen | Druck |
| Bindemittel aus gebranntem Eternit | 0,2 | 0,8 | 1,9 | 3,4 |

### Beispiel 2

Zur Zubereitung eines Wassermörtelbinders wurden 3 kg Deckplatten aus Asbestzement verwendet. Aufgrund einer RTG-Diffraktionsanalyse wurde festgestellt, dass das Material insbesondere durch Portlandit (Ca(OH)₂), Calcit (CaCO₃) und Reste von unhydratisierten Klinkermineralien (identifiziert wurde insbesondere β-C₂S (Ca₂SiO₄)) gebildet ist. Als Asbestmineralien wurden Chryzotil (Mg₃Si₂O₅(OH)₄) Riebeckit (Na₂Fe₅(Si₈O₂₂)(OH,F)₂) und Amosit Fe₇Si₈O₂₂(OH)₂ identifiziert.

Die Probe wurde in einem elektrischen Superkanthal-Ofen gebrannt, wobei das Verfahren das Brennen in einem Schachtofen simulierte: Anlaufzeit von 3 Stunden auf die Temperatur von 1200°C, Haltezeit von 8 Stunden bei dieser Temperatur und langsame Abkühlung im Ofen bis auf eine Temperatur von ungefähr 200°C. Es ist merkbar, dass die Probe nach dem Brennen kompakt ist, ohne etwaige Merkmale des Zerfalls aufzuweisen, obwohl sie während der langsamen Kühlung der kritischen Temperatur von ca 500°C ausgesetzt war, bei der es zur Transformation von β-C₂S in die γ-Modifikation kommt, die den Zerfall des Klinkers verursacht und hydraulisch inaktiv ist.

Nach dem Brennen wurde die Probe gemahlen und anhand einer RTG-Diffraktionsanalyse wurde deren quantitative Phasenzusammensetzung bestimmt, die in Tafel 6 angegeben ist.

**Tafel 6: Phasenzusammensetzung der gebrannten Asbestzement-Deckplatten in Gew.-%, bestimmt anhand einer RTG-Diffraktionsanalyse**

| **Phase** | **Inhalt in Gew.-%** |
|---|---|
| β-C₂S | 69,0 |
| γ-C₂S | 0,6 |
| C₃S | 3,6 |
| C₃A | 1,8 |
| C₄AF | 15,3 |
| freies CaO | 0,1 |
| freies MgO (Periklas) | 6,7 |
| Quarz SiO₂ | 3,0 |

Aus der Probe der gebrannten Deckplatten, der ein geeigneter Aushärteregler beigemischt wurde, wurde durch Mahlen bis zur spezifischen Oberfläche von 474 m²/kg ein hydraulisches Bindemittel für Materialprüfungen zubereitet.

Gemäß der EN 196-3 wurden Volumenbeständigkeit und Aushärtezeit bestimmt. Die Ergebnisse sind in Tafel 7 angegeben.

Gemäß der EN 196-1 wurden aus dem Normmörtel Testbalken von 4 x 4 x 16 cm zum Testen der Druck- und Biegezugfestigkeit gebildet. Die Ergebnisse sind in Tafel 8 angegeben.

**Tafel 7: Erstarrung und Volumenbeständigkeit gemäß EN 196-3**

| **Probe** | **Beginn der Erstarrung (St:Min)** | **Gesamtzeit der Erstarrung (St:Min)** | **Volumenbeständigkeit (mm)** |
|---|---|---|---|
| Bindemittel aus gebrannten Asbestzement-Platten | 0:20 | 1:00 | 0,0 |

**Tafel 8: Biegezug- und Druckfestigkeit gemäß EN 196-1 [MPa]**

| **Probe** | **7 Tage** | | **28 Tage** | |
|---|---|---|---|---|
| | Biegen | Druck | Biegen | Druck |
| Bindemittel aus gebrannten Asbestzement-Platten | 0,8 | 1,9 | 3,1 | 10,0 |

### Beispiel 3

Zur Zubereitung eines Wassermörtelbinders wurden 2,5 kg verschmutzte unsortierte Eternit-Dacheindeckung gemäß Beispiel 1 und 1,5 kg reiner Kalkstein verwendet. Die Probe wurde in einem elektrischen Superkanthal-Ofen gebrannt, wobei das Verfahren das Brennen in einem Schachtofen simulierte: Analaufzeit von 3 Stunden auf die Temperatur von 1200°C, Haltezeit von 8 Stunden bei dieser Temperatur und langsame Abkühlung im Ofen bis auf eine Temperatur von ca 200°C.

Nach dem Brennen wurde die Probe gemahlen und anhand einer RTG-Diffraktionsanalyse wurde deren quantitative Phasenzusammensetzung bestimmt, die in Tafel 9 angegeben ist.

**Tafel 9: Phasenzusammensetzung in Gew.-% der gebrannten Probe Kalkstein/Eternit im Verhältnis 1 : 3, bestimmt anhand einer RTG-Diffraktionsanalyse**

| **Phase** | **Inhalt in Gew.-%** |
|---|---|
| β-C₂S | 40,1 |
| γ-C₂S | 1,0 |
| C₃S | 2,9 |
| C₃A | 3,0 |
| C₄AF | 10,9 |
| freies CaO | 29,9 |
| freies MgO (Periklas) | 3,2 |
| Quarz SiO₂ | 0,5 |
| Bredigit α'-C₂S | 2,7 |
| Åkermanit Ca₂MgSi₂O₇ | 4,3 |
| Maghemit Fe₂O₃ | 0,8 |
| Pyrit FeS₂ | 0,7 |

Aus der Probe des gebrannten Eternits/Kalksteins, der ein geeigneter Aushärteregler beigemischt wurde, wurde durch Mahlen bis zur spezifischen Oberfläche von 425 m²/kg ein hydraulisches Bindemittel für Materialprüfungen zubereitet.

Gemäß der EN 196-3 wurden Volumenbeständigkeit und Aushärtezeit bestimmt. Die Ergebnisse sind in Tafel 10 angegeben.

Gemäß der EN 196-1 wurden aus dem Normmörtel Testbalken von 4 x 4 x 16 cm zum Testen der Druck- und Biegezugfestigkeit gebildet. Die Ergebnisse sind in Tafel 11 angegeben.

**Tafel 10: Erstarrung und Volumenbeständigkeit gemäß EN 196-3**

| **Probe** | **Beginn der Erstarrung (St:Min)** | **Gesamtzeit der Erstarrung (St:Min)** | **Volumenbeständigkeit (mm)** |
|---|---|---|---|
| Bindemittel aus gebrannten Eternit und Kalkstein | 4:20 | 38:00 | 3,0 |

**Tafel 11: Biegezug- und Druckfestigkeit gemäß EN 196-1 [MPa]**

| **Probe** | **7 Tage** | | **28 Tage** | |
|---|---|---|---|---|
| | Biegen | Druck | Biegen | Druck |
| Bindemittel aus gebrannten Eternit und Kalkstein | - | - | 0,4 | 2,4 |

## Patentansprüche

1. Verfahren zur Verwertung von Asbestzementabfall durch thermische Verarbeitung, **dadurch gekennzeichnet, dass** der ungeteilte Abfall in einem Schachtofen oder in einem gleichartigen Ofen gebrannt wird, in dem die Temperatur 2 bis 4 Stunden auf 1100°C bis 1250°C steigt und dann 6 bis 10 Stunden gehalten wird, danach das Material im Ofen langsam abgekühlt und nach der Abkühlung gemahlen und als hydraulisches Bindemittel für Baumateriale verwendet wird.

2. Das Verfahren nach Anspruch 1, **dadurch gekennzeichnet, dass** vor dem Brennen dem Asbestzementabfall reiner Stückkalkstein hinzugefügt wird, um 10 bis 80 Gew.-% Beschickung zu bilden.

3. Das Verfahren nach Anspruch 2, **dadurch gekennzeichnet, dass** der Ofen wird mit Asbestzementabfall und Kalkstein in wechselnden Schichten chargiert.
